# EUROPEAN PATENT APPLICATION

(11) **EP 4 708 527 A1**
(43) Date of publication of application: **11.03.2026**
(21) Application number: 25189494.5
(22) Date of filing: 15.07.2025
(51) Int. Cl.: H01M 50/325, H01M 50/383

(54) **ENERGY STORAGE SYSTEM**

(30) Priority: 22.08.2024 KR 20240112737
(71) Applicant: SAMSUNG SDI CO., LTD., Yongin-si, Gyeonggi-do 17084 (KR)
(72) Inventor: NA, Donju, 17084 Yongin-si, Gyeonggi-do (KR)
(74) Representative: Gulde & Partner

(57) **Abstract**

An energy storage system includes a container having an accommodation space therein, at least one battery rack in the accommodation space inside the container, the at least one battery rack having a plurality of battery modules stacked thereon, an event detection device inside the container, at least one vent on an outer surface of the container, a nitrogen supply device that supplies nitrogen gas into the container, and a control unit electrically connected to the event detection device and the nitrogen supply device, the control unit driving the nitrogen supply device in response to the event detection device detecting an event.

## Description

### BACKGROUND

### 1. Field

Embodiments relate to an energy storage system (ESS).

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

Embodiments include an energy storage system, the energy storage system including a container having an accommodation space therein, at least one battery rack in the accommodation space inside the container, the at least one battery rack having a plurality of battery modules stacked thereon, an event detection device inside the container, at least one vent on an outer surface of the container, a nitrogen supply device that is configured to suppliy nitrogen gas into the container, and a control unit electrically connected to the event detection device and the nitrogen supply device, the control unit being configured to drive the nitrogen supply device in response to the event detection device detecting an event. The event detection device may include a sensor.

The vent may include a hinge including an elastic member, and a vent cover connected to the hinge.

The at least one vent may be opened in response to an increase in an internal pressure of the container as the nitrogen supply device is driven.

If the vent is opened, oxygen inside the container is discharged to the outside, and an oxygen concentration inside the container is lowered.

The vent may be closed by the elastic member in response to the nitrogen supply device being stopped.

The at least one vent may be installed on an upper outer surface of the container.

The event detection device may include an oxygen concentration meter.

The event detection device may be configured to detect a first event in which oxygen concentration inside the container is equal to or greater than a first threshold value, and the control unit may be configured to drive the nitrogen supply device to supply nitrogen gas into the container in response to the event detection device detecting the first event.

The event detection device may be configured to detect a first event in which the oxygen concentration inside the container is equal to or lower than a second threshold value, and the control unit may be configured to stop the driving of the nitrogen supply device in response to the event detection device detecting a second event after the nitrogen supply device is driven.

The oxygen concentration meter may be installed on a ceiling of the container.

The event detection device may include a fire detection device.

If the event detection device detects a fire event inside the container, the control unit drives the nitrogen supply device to supply nitrogen gas into the container in response thereto.

The energy storage system may further include an extinguishing system supplying an extinguishing agent into the container, wherein the control unit is configured to drive the extinguishing system to supply the extinguishing agent into the container in response to the event detection device detecting the fire event.

The extinguishing system may include an agent container for storing the extinguishing agent, a main valve for opening and closing the agent container, a main extinguishing pipe through which the extinguishing agent is transferred from the agent container, a plurality of branch extinguishing pipes branching from the main extinguishing pipe, the plurality of branch extinguishing pipes supplying the extinguishing agent to each battery module, and a plurality of extinguishing nozzles at positions of respective ones of the plurality of battery modules along the plurality of branch extinguishing pipes, and wherein the control unit opens the main valve in response to the event detection device detecting the fire event.

The nitrogen supply device may include a nitrogen container storing the nitrogen gas, and a valve coupled with the nitrogen container, the valve being opened and closed by the control unit.

The nitrogen supply device may further include a main nitrogen pipe through which nitrogen is transferred from the nitrogen container, at least one branch nitrogen pipe branching from the main nitrogen pipe, the at least one branch nitrogen pipe supplying nitrogen, and at least one nitrogen nozzle along the at least one branch nitrogen pipe.

The at least one branch nitrogen pipe may be, e.g., may be arranged or installed, on a ceiling of the container.

The at least one nitrogen nozzle may be positioned so that nitrogen is injected from an upper side to a lower side inside the container.

The at least one nitrogen nozzle may be, e.g., may be arranged or installed, at a center of the ceiling of the container.

The nitrogen supply device may further include a main nitrogen pipe through which nitrogen is transferred from the nitrogen container, a plurality of branch nitrogen pipes branching from the main nitrogen pipe and supplying nitrogen to each of the at least one battery rack, and at least one nitrogen nozzle at each of the at least one battery rack along the plurality of branch nitrogen pipes.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a diagram schematically illustrating an energy storage system according to one or more embodiments of the present disclosure.
FIG. 2 is a diagram showing the detailed structure of a vent according to one or more embodiments of the present disclosure.
FIG. 3 is a diagram schematically illustrating the energy storage system according to one or more embodiments of the present disclosure.
FIG. 4 is a diagram schematically illustrating the energy storage system according to one or more embodiments of the present disclosure.
FIG. 5 is a diagram showing another example of the nitrogen supply device according to one or more embodiments of the present disclosure.
FIG. 6 is a diagram schematically illustrating an energy storage system according to one or more embodiments of the present disclosure.
FIG. 7 is a diagram schematically illustrating a structure of an extinguishing system included in the energy storage system according to one or more embodiments of the present disclosure.
FIG. 8 is a perspective view showing an example of the branch extinguishing pipe and the extinguishing nozzle according to one or more embodiments of the present disclosure.
FIG. 9 is a perspective view showing an example of a heat-sensitive material included in the extinguishing nozzle according to the embodiment illustrated in FIG. 8.
FIG. 10 is a flowchart illustrating a management method of the energy storage system according to one or more embodiments of the present disclosure.
FIG. 11 is a flowchart illustrating a management method of the energy storage system according to one or more embodiments of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In this disclosure, the sizes and relative sizes of layers and regions illustrated in the drawings may be exaggerated for clarity of explanation. That is, the sizes shown in the drawings are only for convenience of understanding and are not limited thereto. In addition, identical reference numerals throughout the specification refer to identical components.

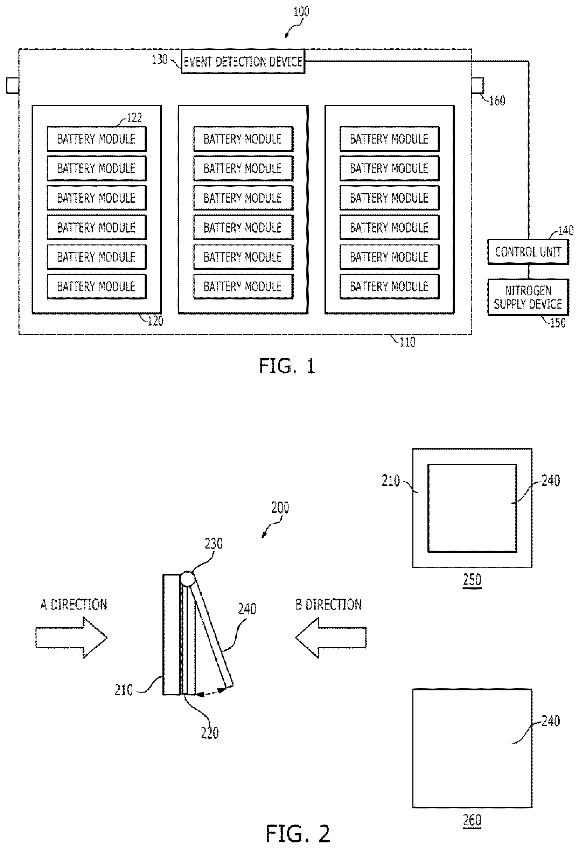

FIG. 1 is a diagram schematically illustrating an energy storage system 100 according to some embodiments of the present disclosure. Referring to FIG. 1, an energy storage system 100 may include a container 110 having an accommodation space therein, at least one battery rack 120 disposed in the accommodation space inside the container 110 and having a plurality of battery modules 122 stacked thereon, an event detection device 130 installed inside the container 110, at least one vent 160 installed on an outer surface of the container 110, a nitrogen supply device 150 that supplies nitrogen gas into the container 110, and a control unit 140 that is electrically connected to the event detection device 130 and the nitrogen supply device 150 and drives the nitrogen supply device 150 in response to the event detection device 130 detecting an event.

According to one or more embodiments of the present disclosure, the battery rack 120 may include at least one battery module 122 and an accommodation space for accommodating the at least one battery module 122. The battery module 122 may include a plurality of battery cells and a module housing. The battery cells may be housed inside the module housing in a stacked form. The battery cell may include a positive lead and a negative lead. Depending on the battery shape, battery cells may be of a circular type, a square type, or a pouch type.

According to one or more embodiments of the present disclosure, in the battery rack 120, instead of a battery module 122, a single stack of stacked cells may form a module. The cell stack may be accommodated in the accommodation space inside the rack housing or may be accommodated in the accommodation space divided by a frame, a partition, or the like.

Battery cells generate a large amount of heat during charging/discharging. The generated heat accumulates in the battery cells and accelerates the deterioration of the battery cells. Accordingly, the battery rack 120 may further include a cooling member to suppress battery cell deterioration. The cooling member is provided at the bottom of the accommodation space where the battery cells are provided, but may also be provided at the top or side surface of the accommodation space depending on the battery rack 120.

According to one or more embodiments of the present disclosure, one or more battery cells configuring each battery module 122 are each capable of discharging exhaust gases, e.g., exhaust gases present or generated, inside the battery cell resulting from abnormal operating conditions, also known as thermal runaway or thermal event to the outside of the battery cell. Accordingly, the battery rack 120 or battery module 122 may be provided with an exhaust port or the like for discharging exhaust gas to prevent exhaust gas from damaging the battery rack 120 or battery module 122.

According to one or more embodiments of the present disclosure, the battery rack 120 may include a battery management system (BMS) for managing battery cells and battery modules 122. The battery management system may include a BMS module coupled to the battery module 122 (or one BMS module coupled to each of the battery modules 122) to manage the battery module 122, and a rack BMS coupled to the battery rack 120 to manage the battery rack 120.

According to one or more embodiments of the present disclosure, a battery management system may include a detection device, a balancing device, and a control device. The battery module 122 may include a plurality of cells connected in series or parallel with each other. The battery modules 122 may be connected to each other in series or parallel. The detection device may detect status information indicating the status of a battery by detecting the status (e.g., one or more out of voltage, current, temperature, or the like) of the battery. The detection device may detect the voltage of each cell or each battery module 122 configuring the battery. The detection device may also detect the current flowing through the battery module 122 or each battery module 122 included in battery rack 120. The detection device may also detect the temperature and/or the ambient temperature of a cell and/or battery module 122 at one point or more in the battery.

According to one or more embodiments of the present disclosure, the balancing device may perform a balancing operation of battery modules 122 and/or cells configuring the battery. The control device may receive status information (e.g., one or more out of voltage, current, temperature, or the like) of the battery module 122 from the detection device. The control device may monitor and calculate the status (e.g., one or more out of voltage, current, temperature, state of charge (SOC), state of health (SOH), or the like) of the battery module 122 based on the status information received from the detection device. In addition, the control device may perform control functions (for example, temperature control, balancing control, charge/discharge control, or the like), protection functions (for example, overdischarge protection, overcharge protection, overcurrent protection, short-circuit protection, fire extinguishing function, or the like), based on the status monitoring results. In addition, the control device may perform wired or wireless communication functions with an external device (for example, a higher level controller or PCS (Power Conversion System)) of the battery rack 120.

According to one or more embodiments of the present disclosure, the control device may also control charging and discharging operations and protection operations of the battery. For this purpose, the control device may include a charge/discharge control unit, a balancing control unit, and a protection unit.

According to one or more embodiments of the present disclosure, a battery management system, which monitors battery status, and performs diagnosis and control, communication, and protection functions, may calculate the charge and discharge status and the battery life or state of health (SOH), cut off battery power (e.g., relay control) when necessary, control thermal management (cooling, heating, or the like), perform high-voltage interlock functions, and detect or calculate insulation and short-circuit state.

According to one or more embodiments of the present disclosure, the event detection device 130 may be installed on the ceiling of the container 110. For example, the event detection device 130 may be installed at the center of the ceiling of the container 110 or may be installed on the ceiling of the container 110 at a predetermined distance from the vent 160. According to one or more embodiments of the present disclosure, the event detection device 130 may include an oxygen concentration meter or indicator. According to one or more embodiments of the present disclosure, the event detection device 130 may include a fire detection device.

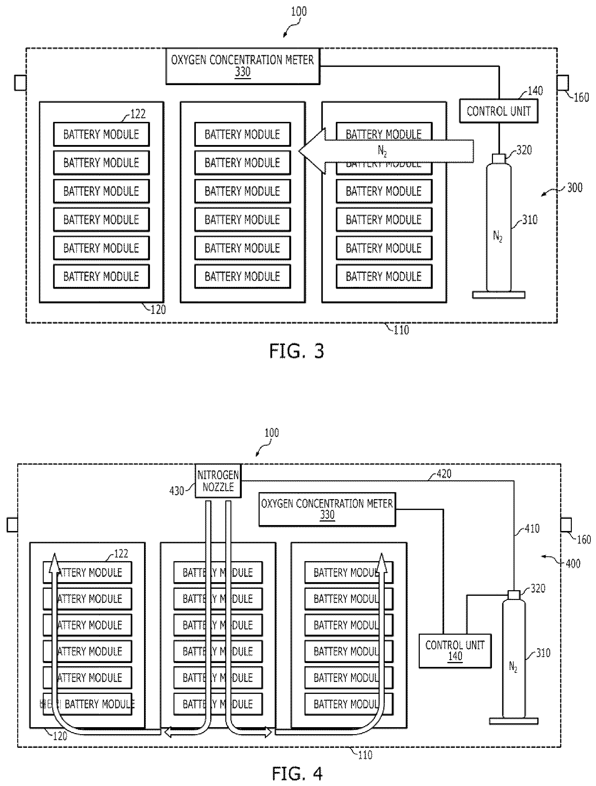

According to one or more embodiments of the present disclosure, the control unit 140 and the nitrogen supply device 150 may be installed outside the container 110, as shown in FIG. 1, but may instead be installed inside the container 110. According to one or more embodiments of the present disclosure, the control unit 140 may be installed inside the container 110, and the nitrogen supply device 150 may be installed outside the container 110. The locations where the control unit 140 and the nitrogen supply device 150 are installed are varied. Below, a detailed embodiment of the nitrogen supply device 150 is illustrated in FIG. 3.

According to one or more embodiments of the present disclosure, a vent 160 may be installed on an outer surface (for example, an outer side surface) of the container 110 to discharge gas present in the accommodation space inside the container 110, to the outside. According to one or more embodiments of the present disclosure, an opening may be formed in an outer surface of the container 110, a support for a vent 160 may be installed in the opening, and then the vent 160 may be installed.

According to one or more embodiments of the present disclosure, the vent 160 may be opened in response to an increase in an internal pressure of the container 110 as the nitrogen supply device 150 is driven. According to one or more embodiments of the present disclosure, when the vent 160 is opened, oxygen inside the container 110 may be discharged to the outside, thereby lowering the oxygen concentration inside the container 110. According to one or more embodiments of the present disclosure, the vent 160 may be closed in response to a decrease in the internal pressure of the container 110 due to the nitrogen supply device 150 ceasing supplying the nitrogen. According to one or more embodiments of the present disclosure, the vent 160 may be installed on the upper outer surface (for example, the upper outer side surface) of the container 110. The detailed structure of the vent 160 will be described below with reference to FIG. 2.

FIG. 2 is a diagram showing the detailed structure of a vent 200 according to one embodiment of the present disclosure. Referring to FIG. 2, the vent 200 may include a support 210 having an opening formed therein, a hinge 230 including an elastic member (e.g. a spring member), and a vent cover 240 connected to the hinge 230. According to one embodiment of the present disclosure, the vent 200 may further include a sealing packing material 220 installed between the support 210, having an opening formed therein, and the hinge 230.

According to one or more embodiments of the present disclosure, the vent 200 may be a passive vent in which the vent cover 240 is opened by gas above a certain pressure. The passive vent may be configured to be opened and discharge gas from the internal space when the pressure inside the structure in which the vent is installed exceeds a certain value. In addition, a passive vent may be closed when the pressure inside the structure where the vent is installed falls below a certain value.

According to one or more embodiments of the present disclosure, the support 210 having an opening formed therein may be arranged along an edge of the opening in the structure in which the vent 200 is installed such that a sealing packing material 220, a hinge 230, and a vent cover 240 may be installed. The opening may be formed in various shapes such as a circle or a square. The support 210 may be formed in various shapes such as a circle or a square, regardless of the shape of the opening. The opening may be formed smaller than the size of the support 210.

According to one or more embodiments of the present disclosure, the sealing packing material 220 may be installed on the support 210 having an opening formed therein so as to effectively block the inflow and outflow of gas when the vent 200 is closed. For example, the sealing packing material 220 may be arranged between the support 210 and the vent cover 240. The sealing packing material 220 may be installed on the support 210 in which an opening is formed by an O-ring or the like. According to one or more embodiments of the present disclosure, the sealing packing material 220 may include at least one packing member of rubber, silicone, heat-resistant material, pressure-resistant material, or the like.

According to one or more embodiments of the present disclosure, the hinge 230 may be connected to the vent cover 240 to control the inflow and outflow of gas by opening or closing the vent cover 240. According to one or more embodiments of the present disclosure, the hinge 230 may be coupled with the support 210 having an opening formed therein or the sealing packing material 220 installed on the support 210. According to one or more embodiments of the present disclosure, the hinge 230 may be formed of an elastic member such as a spring, and the vent 200 may be closed by the elastic member.

According to one or more embodiments of the present disclosure, the vent cover 240 may be connected to the hinge 230 to close the opening. Direction A in FIG. 2 refers to a direction looking at the vent 200 from the inside of the structure where the vent 200 is installed, and direction B refers to a direction looking at the vent 200 from the outside of the structure where the vent 200 is installed. Referring to an example 250 of the vent 200 viewed from the direction A, the opening is formed smaller than the support 210, so that the vent cover 240 may be configured to completely cover the opening of the support 210. Referring to an example 260 of the vent 200 viewed from the B direction, the opening is formed smaller than the support 210 and/or the vent cover 240, so that the vent cover 240 may be configured to completely cover the support 210.

The vent 200 may further include a filter layer made of activated carbon or the like between the support 210 and the vent cover 240. The filter layer may effectively block toxic gases generated inside the structure in which the vent 200 is installed.

FIG. 3 is a diagram schematically illustrating the energy storage system 100 according to one or more embodiments of the present disclosure. The battery rack 120 and battery module 122 of the energy storage system 100 illustrated in FIG. 3 may have the same/similar structure as the battery rack 120 and battery module 122 of the energy storage system 100 illustrated in FIG. 1, and therefore, a detailed description thereof is omitted.

Referring still to FIG. 3, the energy storage system 100 may include a container 110 having an accommodation space therein, at least one battery rack 120 disposed in the accommodation space inside the container 110 and having a plurality of battery modules 122 stacked thereon, an oxygen concentration meter 330 installed inside the container 110, at least one vent 160 installed on an outer surface of the container 110, a nitrogen supply device 300 including a nitrogen container 310 and a valve 320 for supplying nitrogen gas into the container 110, and a control unit 140 that is electrically connected to the oxygen concentration meter 330 and the nitrogen supply device 300 and drives the nitrogen supply device 300 in response to the oxygen concentration meter 330 detecting an event.

According to one or more embodiments of the present disclosure, the oxygen concentration meter 330 may be installed on the ceiling of the container 110. For example, the oxygen concentration meter 330 may be installed at the center of the ceiling of the container 110 or may be installed on the ceiling of the container 110 at a predetermined distance from the vent 160.

According to one or more embodiments of the present disclosure, at least one vent 160 may be the same as vent 200 according to the embodiment illustrated in FIG. 2. The vent 160 may be installed on the upper outer surface (for example, the upper outer side surface) of the container 110.

According to one or more embodiments of the present disclosure, the nitrogen supply device 300 may include a nitrogen container 310 and a valve 320 coupled with the nitrogen container 310, the valve 320 being opened and closed by the control unit 140.

According to one or more embodiments of the present disclosure, the control unit 140 may drive the nitrogen supply device 300 in response to the oxygen concentration meter 330 detecting a first event in which the oxygen concentration inside the container 110 is equal to or greater than a predetermined first threshold value (for example, 20%, 10%, or 5%). In this case, nitrogen gas may be supplied into the container 110. For example, the control unit 140 may open the valve 320 of the nitrogen supply device to drive the nitrogen supply device 300. The valve 320 may be a valve that is operated electronically according to a command from the control unit 140, such as a solenoid valve. The valve 320 is opened so that nitrogen gas stored in the nitrogen container 310 may be supplied into the container 110. The vent 160 may be opened in response to an increase in the internal pressure of the container 110 due to a supply of nitrogen gas. When the vent 160 is opened, the oxygen inside the container 110 rises as relatively heavy nitrogen gas is supplied and may be discharged to the outside through the vent 160. Accordingly, the oxygen concentration inside the container 110 may be reduced.

According to one or more embodiments of the present disclosure, the control unit 140 may stop driving the nitrogen supply device 300 in response to the oxygen concentration meter 330 detecting a second event in which an oxygen concentration inside the container 110 is equal to or lower than a predetermined second threshold value (for example, 10%, 5%, or 3%), thereby stopping the supply of nitrogen gas into the container 110. The vent 160 may be closed in response to the nitrogen supply device 300 being stopped. For example, the vent 160 may be closed after the nitrogen supply device 300 is stopped.

According to one or more embodiments of the present disclosure, the nitrogen supply device 300 may be installed outside the container 110 and electrically connected to each of the control units 140 installed in a plurality of containers 110. The nitrogen supply device 300 may individually supply nitrogen gas to a plurality of containers 110 based on signals received from the respective control units 140, according to embodiments disclosed in the present disclosure.

According to one or more embodiments of the present disclosure, by maintaining the oxygen concentration inside the energy storage system 100 below a certain value through the nitrogen supply device 300, oxidation of a number of metal parts included inside the energy storage system 100 is suppressed, thereby extending the life of the energy storage system 100 and, in particular, preventing quality deterioration due to rust in terminal parts, or the like.

In addition, according to one or more embodiments of the present disclosure, the manufacturing cost of the energy storage system may be reduced by using the nitrogen supply device 300 instead of a heating, ventilation, air conditioning (HVAC) device.

FIG. 4 is a diagram schematically illustrating the energy storage system 100 according to some embodiments of the present disclosure. The battery rack 120 and battery module 122 of the energy storage system 100 illustrated in FIG. 4 may have the same or a similar structure as the battery rack 120 and battery module 122 of the energy storage system 100 illustrated in FIG. 1, and therefore, a detailed description thereof is omitted.

Referring still to FIG. 4, the energy storage system 100 may include a container 110 having an accommodation space therein, at least one battery rack 120 disposed in the accommodation space inside the container 110 and having a plurality of battery modules 122 stacked therein, an oxygen concentration meter 330 installed inside the container 110, at least one vent 160 installed on an outer surface of the container 110, a nitrogen supply device 400 that supplies nitrogen gas into the container 110, and a control unit 140 that is electrically connected to the oxygen concentration meter 330 and the nitrogen supply device 400 and drives the nitrogen supply device 400 in response to the oxygen concentration meter 330 detecting an event.

According to one or more embodiments of the present disclosure, the oxygen concentration meter 330 may be installed on the ceiling of the container 110. For example, the oxygen concentration meter 330 may be installed at the center of the ceiling of the container 110 or may be installed on the ceiling of the container 110 at a predetermined distance from the vent 160.

According to one or more embodiments of the present disclosure, at least one vent 160 may be a vent 200 according to the embodiment illustrated in FIG. 2. The vent 160 may be installed on the upper outer surface (for example, the upper outer side surface) of the container 110.

According to one or more embodiments of the present disclosure, the control unit 140 and the nitrogen supply device 400 may be installed inside the container 110, as shown in FIG. 4, but may instead be installed outside the container 110. According to one or more embodiments of the present disclosure, the control unit 140 may be installed inside the container 110, and the nitrogen supply device 400 may be installed outside the container 110. The positions where the control unit 140 and the nitrogen supply device 400 may be varied.

According to one or more embodiments of the present disclosure, the nitrogen supply device 400 may include a nitrogen container 310, a valve 320 coupled with the nitrogen container 310, the valve 320 being opened and closed by a control unit 140, a main nitrogen pipe 410 through which nitrogen is transferred from the nitrogen container 310, at least one branch nitrogen pipe 420 branched from the main nitrogen pipe 410 and supplying nitrogen, and at least one nitrogen nozzle 430 formed along the at least one branch nitrogen pipe 420.

According to one or more embodiments of the present disclosure, the at least one branch nitrogen pipe 420 may be installed on the ceiling of the container 110.

According to one or more embodiments of the present disclosure, at least one nitrogen nozzle 430 may be installed on the ceiling of the container 110. For example, at least one nitrogen nozzle 430 may be installed at the center of the ceiling of the container 110 or may be installed on the ceiling of the container 110 at a predetermined distance from the vent 160.

In one or more embodiments of the present disclosure, the at least one nitrogen nozzle 430 may be positioned so that nitrogen is injected from the upper side to the lower side inside the container.

According to one or more embodiments of the present disclosure, the control unit 140 may drive the nitrogen supply device 400 in response to the oxygen concentration meter 330 detecting a first event in which the oxygen concentration inside the container 110 is equal to or greater than a predetermined first threshold value (for example, 20%, 10%, or 5%). In this case, nitrogen gas may be supplied into the container 110. For example, the control unit 140 may open the valve 320 of the nitrogen supply device to drive the nitrogen supply device 300. The valve 320 may be a valve that is operated electronically according to a command from the control unit 140, such as a solenoid valve. For example, when the valve 320 is opened, the nitrogen gas stored in the nitrogen container 310 may move to the main nitrogen pipe 410 and at least one branch nitrogen pipe 420 and be injected from the upper side to the lower side inside the container from at least one nitrogen nozzle 430 along the directions of the arrows shown in FIG. 4. Nitrogen gas may be supplied into the container 110 as described above. The vent 160 may be opened in response to an increase in the internal pressure of the container 110 due to a supply of nitrogen gas. When the vent 160 is opened, the oxygen inside the container 110 may quickly rise and be discharged to the outside through the vent 160 as relatively heavy nitrogen gas is injected from the upper side to the lower side of the container 110. Accordingly, the oxygen concentration inside the container 110 may be effectively reduced.

According to one or more embodiments of the present disclosure, the control unit 140 may stop the driving of the nitrogen supply device 400 in response to the oxygen concentration meter 330 detecting a second event in which an oxygen concentration inside the container 110 is equal to or lower than a predetermined second threshold value (for example, 10%, 5%, or 3%), thereby stopping the supply of nitrogen gas into the container 110. The vent 160 may be closed in response to the nitrogen supply device 400 being stopped. For example, the vent 160 may be closed after the nitrogen supply device 400 is stopped. The first threshold may have a larger value than the second threshold.

According to one or more embodiments of the present disclosure, the nitrogen supply device 400 may be installed outside the container 110 and electrically connected to each of the control units 140 installed in a plurality of containers 110. The nitrogen supply device 400 may individually supply nitrogen gas to a plurality of containers 110 based on signals received from the respective control units 140, according to embodiments disclosed in the present disclosure.

According to one or more embodiments of the present disclosure, by maintaining the oxygen concentration inside the energy storage system 100 below a certain value through the nitrogen supply device 400, oxidation of a number of metal parts included inside the energy storage system 100 is suppressed, thereby extending the life of the energy storage system 100 and, in particular, preventing quality deterioration due to rust in terminal parts, or the like.

In addition, according to one or more embodiments of the present disclosure, the manufacturing cost of the energy storage system may be reduced by using the nitrogen supply device 400 instead of a heating, ventilation, air conditioning (HVAC) device.

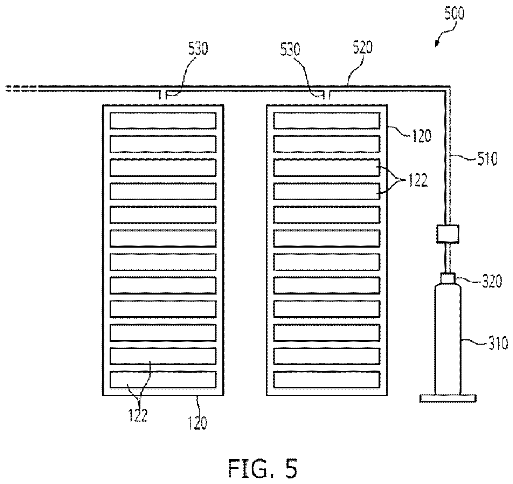

FIG. 5 is a diagram showing another example of the nitrogen supply device 500 according to some embodiments of the present disclosure. Referring to FIG. 5, the energy storage system according to one or more embodiments of the present disclosure may include a nitrogen supply device 500 including a nitrogen container 310, a valve 320 coupled with the nitrogen container 310, a main nitrogen pipe 510 through which nitrogen is transferred from the nitrogen container 310, at least one or a plurality of branch nitrogen pipes 520 branching from the main nitrogen pipe 510 and supplying nitrogen to at least one battery rack 120 in which a plurality of battery modules 122 are stacked, and at least one nitrogen nozzle 530 formed at a position corresponding to each battery rack 120 along the plurality of branch nitrogen pipes 520. According to one or more embodiments of the present disclosure, a plurality of branch nitrogen pipes 520 and at least one nitrogen nozzle 530 are connected to the upper region of each battery rack 120, so that nitrogen gas may be injected from the upper inside to the lower inside of the energy storage system. Accordingly, oxygen, which is a relatively lighter gas than nitrogen gas, quickly rises and is discharged through a vent installed on the outer surface of the energy storage system (e.g., upper outside of the container), so that the oxygen concentration inside the energy storage system may be effectively reduced.

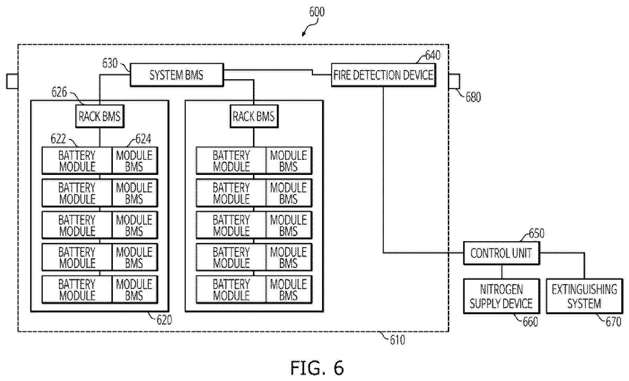

FIG. 6 is a diagram schematically illustrating an energy storage system 600 according to some embodiments of the present disclosure. The battery rack 620 and battery module 622 of the energy storage system 600 illustrated in FIG. 6 may have the same/similar structure as the battery rack 120 and battery module 122 of the energy storage system 100 illustrated in FIG. 1, and therefore, a detailed description thereof is omitted.

Continuing with reference to FIG. 6, the energy storage system 600 may include a container 610 having an accommodation space therein, at least one battery rack 620 disposed in the accommodation space inside the container 610 and having a plurality of battery modules 622 stacked thereon, a fire detection device 640 installed inside the container 610, at least one vent 680 installed on an outer surface of the container 610, a nitrogen supply device 660 that supplies nitrogen gas into the container 610, an extinguishing system 670 that supplies an extinguishing agent into the container 610, and a control unit 650 that is electrically connected to the fire detection device 640, the nitrogen supply device 660, and the extinguishing system 670, and drives the nitrogen supply device 660 and the extinguishing system 670 in response to the fire detection device 640 detecting an event.

According to one or more embodiments of the present disclosure, the fire detection device 640 may detect a fire event (for example, deterioration, thermal runaway, opening of a vent of a battery cell, or the like) inside the container 610. The fire detection device 640 may include a smoke detection sensor, a thermometer (e.g., a temperature sensor), a pressure detection sensor for detecting the opening of a vent of a battery cell, a gas flow detection sensor, or the like.

According to one or more embodiments of the present disclosure, at least one vent 680 may be a vent 200 according to the embodiment illustrated in FIG. 2. The vent 680 may be installed on the upper outer surface (for example, the upper outer side surface) of the container 610.

According to one or more embodiments of the present disclosure, the nitrogen supply device 660 may be a nitrogen supply device according to any one of the nitrogen supply devices illustrated in FIGS. 3 to 5. According to one or more embodiments of the present disclosure, in response to the fire detection device 640 detecting a fire event, the control unit 650 may drive the nitrogen supply device 660 to supply nitrogen gas into the container 610.

According to one or more embodiments of the present disclosure, in response to the fire detection device 640 detecting a fire event, the control unit 650 may drive the extinguishing system 670 to supply an extinguishing agent into the container 610.

According to one or more embodiments of the present disclosure, the control unit 650, the nitrogen supply device 660, and the extinguishing system 670 may be installed outside the container 610. However, the locations where the nitrogen supply device 660 and the extinguishing system 670 may vary. For example, the control unit 650, the nitrogen supply device 660, and the extinguishing system 670 may be installed inside the container 610.

According to one or more embodiments of the present disclosure, the nitrogen supply device 660 and the extinguishing system 670 may be installed outside the container 610 and electrically connected to each of the control units 650 installed in the plurality of containers 610. The nitrogen supply device 660 and the extinguishing system 670 may individually supply nitrogen gas and extinguishing agent to the plurality of containers 610 based on signals received from the respective control units 650, according to the embodiment disclosed in the present disclosure. In other embodiments, a plurality of containers may share one control unit 650.

According to one or more embodiments of the present disclosure, the battery module 622 may include a BMS module 624, the battery rack 620 may include a rack BMS 626, and the energy storage system 600 may further include a system BMS 630 that controls all of the rack BMSs 626 within the container 610. When the vent of the battery cell is opened due to deterioration, thermal runaway, or the like of each battery cell of the battery module 622, the BMS module 624 may detect this and transmit a signal regarding a fire event to the rack BMS 626, and the system BMS 630 may receive a signal regarding the fire event from each rack BMS 626 and transmit a signal causing the fire detection device 640 to detect the fire event, to the fire detection device 640.

According to one or more embodiments of the present disclosure, a system BMS 630 or a fire detection device 640 may be used to quickly detect a fire inside the energy storage system 600, thereby shortening the fire response time.

According to one or more embodiments of the present disclosure, by operating the nitrogen supply device 660 together with an extinguishing system 670, a fire may be extinguished while simultaneously suppressing an oxygen concentration below a certain value, thereby effectively preventing thermal runaway of battery cells inside an energy storage system 600 and secondary accidents caused thereby.

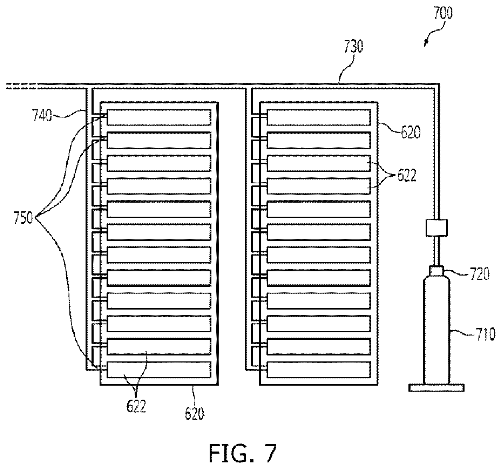

FIG. 7 is a diagram schematically illustrating a structure of an extinguishing system 700 included in the energy storage system according to some embodiments of the present disclosure. Referring to FIG. 7, the extinguishing system 700 may include an extinguishing agent container 710 storing an extinguishing agent, a main valve 720 for opening and closing the extinguishing agent container 710, a main extinguishing pipe 730 through which the extinguishing agent is transferred from the extinguishing agent container 710, a plurality of branch extinguishing pipes 740 branching from the main extinguishing pipe 730 and supplying the extinguishing agent to each battery module 622 within the battery rack 620, and a plurality of extinguishing nozzles 750 formed at positions respectively corresponding to the battery modules 622 along the plurality of branch extinguishing pipes 740.

According to one or more embodiments of the present disclosure, the extinguishing system 700 may be the extinguishing system 670 illustrated in FIG. 6 and may be controlled by the control unit 650 illustrated in FIG. 6. Here, in response to the fire detection device 640 illustrated in FIG. 6 detecting a fire event, the control unit 650 may open the main valve 720 of the extinguishing system 700.

The extinguishing system 700 illustrated in FIG. 7 may be disposed inside and/or outside the energy storage system together with the nitrogen supply device 500 illustrated in FIG. 5.

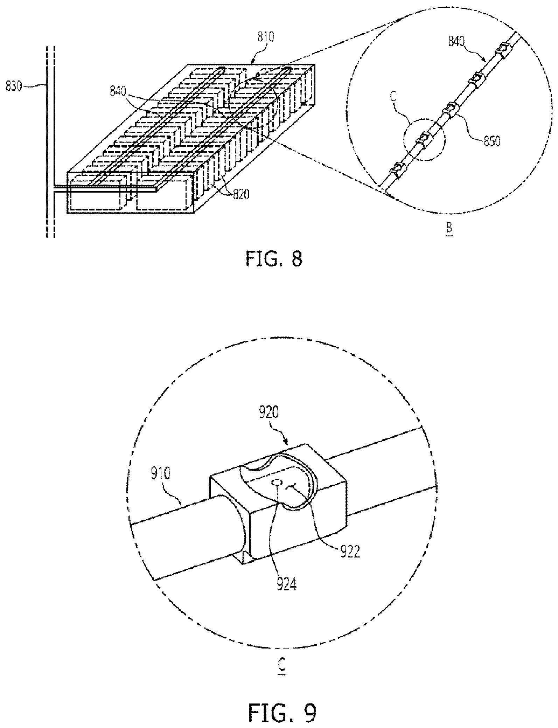

FIG. 8 is a perspective view showing an example of the branch extinguishing pipe and the extinguishing nozzle according to some embodiments of the present disclosure. According to one or more embodiments of the present disclosure, the main extinguishing pipe 830, the plurality of branch extinguishing pipes 840, and the plurality of extinguishing nozzles 850 illustrated in FIG. 8 may correspond to the main extinguishing pipe 730, the plurality of branch extinguishing pipes 740, and the plurality of extinguishing nozzles 750 illustrated in FIG. 7, respectively. Here, the main extinguishing pipe 830 extended from the agent container 710 may be branched into a plurality of branch extinguishing pipes 840 and connected to or disposed on the upper part of the battery rack 810. The plurality of branch extinguishing pipes 840 may be disposed on top of each battery module 820 housed within the battery rack 810.

B is an enlarged perspective view showing the bottom surface of the branch extinguishing pipes 840 and the extinguishing nozzles 850. Referring to B, a plurality of extinguishing nozzles 850 may be formed in the branch extinguishing pipe 840. According to one embodiment, the extinguishing nozzle 850 may be formed at a corresponding position on the upper side of each battery module 820 along the branch extinguishing pipe 840. In other words, each extinguishing nozzle 850 may be arranged at a position corresponding to one of the battery modules 820.

FIG. 9 is a perspective view showing an example of a heat-sensitive material included in the extinguishing nozzle 920 according to the embodiment illustrated in FIG. 8. FIG. 9 is an enlarged perspective view of area C of FIG. 8, showing a portion of the bottom surface of a branch extinguishing pipe 910. An extinguishing nozzle 920 may be formed in the branch extinguishing pipe 910. In one embodiment, the extinguishing nozzle 920 may include a heat-sensitive material 922. The heat-sensitive material 922 may be formed on one side of the extinguishing nozzle 920 in the direction in which the extinguishing agent is injected from the extinguishing nozzle 920 (for example, in the direction of gravity). In FIG. 9, the extinguishing nozzle is shown as having a substantially rectangular shape, but the shape of the extinguishing nozzle 920 may be appropriately changed to a polyhedral shape, a spherical shape, a hemispherical shape, or the like Accordingly, the shape of the heat-sensitive material 922 may also be appropriately changed according to the shape of the extinguishing nozzle 920. The heat-sensitive material 922 may be formed in the direction in which the extinguishing agent is injected from the extinguishing nozzle 920.

The heat-sensitive material 922 may be melted at a temperature above a predetermined threshold value. For example, the critical temperature at which the heat-sensitive material 922 melts may be in the range of 80 degrees Celsius to 250 degrees Celsius, or in the range of 100 degrees Celsius to 220 degrees Celsius, or in the range of 120 degrees Celsius to 200 degrees Celsius. Accordingly, when a fire occurs in a battery cell within a battery module, the heat-sensitive material 922 may melt due to heat or flames discharged through the vent of the battery cell.

The material of the heat-sensitive material 922 may be determined by considering the temperature rise within the battery module in the event of a fire in the battery cell. The heat-sensitive material 922 may be made of a resin material such as Acrylonitrile Butadiene Styrene (ABS) or Polypropylene (PP), but other types of heat-sensitive materials are possible.

The heat-sensitive material 922 may be formed in a shape that surrounds an injection hole 924 formed in the branch extinguishing pipe 910. In this case, the heat-sensitive material 922 normally blocks the injection hole 924, but when a fire occurs, the heat-sensitive material 922 melts due to heat, allowing the injection hole 924 to open. When the injection hole 924 is opened, the pressure in the corresponding part is lowered, so that the extinguishing agent transferred to the branch extinguishing pipe 910 according to the pressure gradient may be injected through the injection hole 924. The extinguishing agent may be injected directly onto the top of the battery module where the fire occurred through the injection hole 924.

In FIG. 9, the heat-sensitive material 922 is shown as surrounding the injection hole 924 in an area wider than the injection hole 924, but the shape of the heat-sensitive material 922 may vary. For example, the heat-sensitive material 922 may be formed in a shape corresponding to the size of the diameter of the injection hole 924. In addition, the number of injection holes 924 formed in the branch extinguishing pipe 910 may be two or more, and the sizes, positions, and arrangement of the injection holes 924 may also be appropriately changed.

The heat-sensitive material 922 may be formed of a material and/or thickness capable of withstanding the injection pressure of the extinguishing agent. In addition, by controlling the shape, material, thickness, or the like of the heat-sensitive material 922, the time at which the injection hole 924 is opened may be controlled.

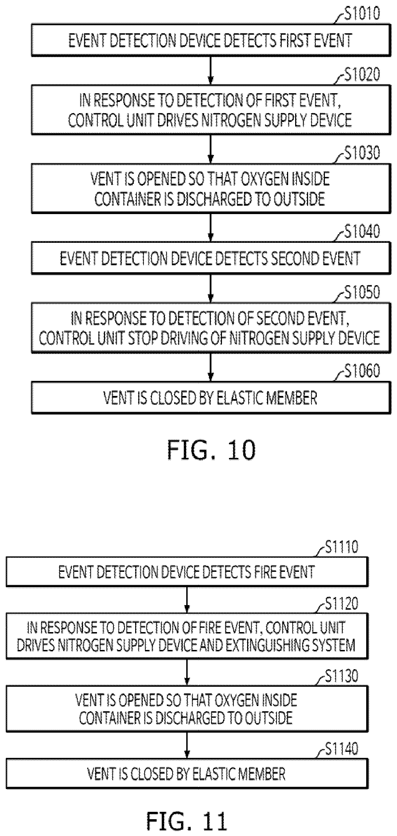

FIG. 10 is a flowchart illustrating a management method of the energy storage system according to some embodiments of the present disclosure. Here, the energy storage system may be any one of the energy storage systems disclosed according to one or more embodiments of the present disclosure. Referring to FIG. 10, first, an event detection device may detect a first event (S1010). Here, the first event may be an event in which the oxygen concentration inside the container is a first threshold value (for example, 20%, 10%, or 5%) or more.

In response to detecting the first event, the control unit may drive the nitrogen supply device (S1020). Thereafter, the vent is opened so that oxygen inside the container may be discharged to the outside (S1030).

As oxygen is discharged to the outside, the event detection device may detect a second event (S1040). Here, the second event may be an event in which the oxygen concentration inside the container is greater than a second threshold value (for example, 10%, 5%, or 3%). In response to the detection of the second event, the control unit may stop the driving of the nitrogen supply device (S1050). Finally, the vent may be closed by an elastic member (S1060).

FIG. 11 is a flowchart illustrating a management method of the energy storage system according to some embodiments of the present disclosure. Here, the energy storage system may be any one of the energy storage systems disclosed according to one or more embodiments of the present disclosure. Referring to FIG. 11, first, an event detection device may detect a fire event (S1110). In response to the detection of a fire event, the control unit may drive the nitrogen supply device and the extinguishing system (S1120). Thereafter, the vent is opened so that oxygen inside the container may be discharged to the outside (S1130). Finally, the vent is closed by an elastic member (S1140).

In an energy storage system configured by connecting racks, in each of which a plurality of secondary batteries are stacked. When a fire occurs due to deterioration or overheating of the secondary batteries, a thermal runaway phenomenon may occur, causing chain fires that cannot be extinguished with general extinguishing equipment. In addition, since the energy storage system includes a large number of metal parts inside, when the parts are oxidized, quality control of the energy storage system may be difficult. The problems described above may reduce the safety and reliability of energy storage systems.

The purpose of the present disclosure is to provide an energy storage system including a system capable of extending the life of components included in the energy storage system and effectively preventing and extinguishing a fire occurring in the energy storage system.

According to one or more embodiments of the present disclosure, by maintaining the oxygen concentration inside the energy storage system below a certain value through a nitrogen supply device, oxidation of a number of metal parts included inside the energy storage system is suppressed, thereby extending the life of the energy storage system and, in particular, preventing quality deterioration due to rust in terminal parts, or the like.

According to one or more embodiments of the present disclosure, the manufacturing cost of an energy storage system may be reduced by using a nitrogen supply device instead of a heating, ventilation, air conditioning (HVAC) device.

According to one or more embodiments of the present disclosure, a fire detection device may be used to quickly detect a fire inside the energy storage system, thereby shortening the fire response time.

According to one or more embodiments of the present disclosure, by operating the nitrogen supply device together with an extinguishing system, a fire may be extinguished while simultaneously suppressing an oxygen concentration below a certain value, thereby effectively preventing thermal runaway of battery cells inside an energy storage device and secondary accidents caused thereby.

According to one or more embodiments of the present disclosure, the extinguishing agent may be delivered to any battery module included in the energy storage system. In addition, since the branch extinguishing pipe is connected to the upper region of each battery module, an extinguishing agent may be supplied to all battery modules even when a plurality of battery modules are aligned adjacently in the front-rear, left-right, and/or up-down directions. Accordingly, the extinguishing agent may be injected intensively on battery modules that exhibit abnormal behavior (for example, vent gas discharge, fire outbreak, or the like).

According to one or more embodiments of the present disclosure, a branch nitrogen pipe is connected to the upper region of each of the energy storage system or the battery rack, so that nitrogen gas may be injected from the upper side to the lower side of the energy storage system. Accordingly, oxygen, which is a relatively lighter gas than nitrogen gas, quickly rises and is discharged through a vent installed on the outer surface of the energy storage system, so that the oxygen concentration inside the energy storage system may be effectively reduced.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An energy storage system (100), comprising:
a container (110) having an accommodation space therein;
at least one battery rack (120) in the accommodation space inside the container (110), the at least one battery rack (120) having a plurality of battery modules (122) stacked thereon;
an event detection device (130) inside the container (110);
at least one vent (160) on an outer surface of the container (110);
a nitrogen supply device (150) configured to supply nitrogen gas into the container (110); and
a control unit (140) electrically connected to the event detection device (130) and the nitrogen supply device (150), the control unit (140) being configured to drive the nitrogen supply device (150) in response to the event detection device (130) detecting an event.

2. The energy storage system (100) as claimed in claim 1, wherein the vent (200) includes:
a hinge (230) including an elastic member; and
a vent cover (240) connected to the hinge (230).

3. The energy storage system (100) as claimed in claim 1 or 2, wherein the at least one vent (200) is configured to be opened in response to an increase in an internal pressure of the container (110) as the nitrogen supply device (150) is driven.

4. The energy storage system (100) as claimed in one of claims 1 to 3, wherein the vent (200) is configured to be closed by the elastic member in response to the nitrogen supply device (150) being stopped.

5. The energy storage system (100) as claimed in one of claims 1 to 4, wherein the at least one vent (160) is installed on an upper outer surface of the container (110).

6. The energy storage system (100) as claimed in one of claims 1 to 5, wherein the event detection device (130) includes an oxygen concentration meter (330).

7. The energy storage system (100) as claimed in one of claims 1 to 6, wherein:
the event detection device (130) configured to detect a first event in which oxygen concentration inside the container (110) is equal to or greater than a first threshold value, and
the control unit (140) drives the nitrogen supply device (150) to supply nitrogen gas into the container (110) in response to the event detection device (130) detecting the first event.

8. The energy storage system (100) as claimed in one of claims 1 to 7, wherein:
the event detection device (130) configured to detect a first event in which the oxygen concentration inside the container (110) is equal to or lower than a second threshold value, and
the control unit (140) configured to stop the driving of the nitrogen supply device (150) in response to the event detection device (130) detecting a second event after the nitrogen supply device (150) is driven.

9. The energy storage system (600) as claimed in one of claims 1 to 8, wherein the event detection device (130) includes a fire detection device (640).

10. The energy storage system (600) as claimed in claim 9, wherein if the event detection device (130) configured to detect a fire event inside the container (610), the control unit (650) configured to drive the nitrogen supply device (660) to supply nitrogen gas into the container (610) in response thereto.

11. The energy storage system (600) as claimed in claim 10, further comprising an extinguishing system (670) supplying an extinguishing agent into the container (610), wherein the control unit (650) configured to drive the extinguishing system (670) to supply the extinguishing agent into the container (610) in response to the event detection device (130) detecting the fire event.

12. The energy storage system (600) as claimed in claim 11, wherein the extinguishing system (700) includes:
an agent container (710) for storing the extinguishing agent;
a main valve (720) for opening and closing the agent container (710);
a main extinguishing pipe (730) through which the extinguishing agent is transferred from the agent container (710);
a plurality of branch extinguishing pipes (740) branching from the main extinguishing pipe (730), the plurality of branch extinguishing pipes (740) supplying the extinguishing agent to each battery module (622); and
a plurality of extinguishing nozzles (750) at positions of respective ones of the plurality of battery modules (622) along the plurality of branch extinguishing pipes (740), and
wherein the control unit (650) configured to open the main valve (720) in response to the event detection device (130) detecting the fire event.

13. The energy storage system (100) as claimed in one of claims 1 to 12, wherein the nitrogen supply device (300) includes:
a nitrogen container (310) storing the nitrogen gas; and
a valve (320) coupled with the nitrogen container (110), the valve (320) being configured to be opened and closed by the control unit (140).

14. The energy storage system (100) as claimed in claim 13, wherein the nitrogen supply device (400) further includes:
a main nitrogen pipe (410) through which nitrogen is transferred from the nitrogen container (110);
at least one branch nitrogen pipe (420) branching from the main nitrogen pipe, the at least one branch nitrogen pipe (420) supplying nitrogen; and
at least one nitrogen nozzle (430) along the at least one branch nitrogen pipe (420).

15. The energy storage system (100) as claimed in claim 14, wherein the at least one nitrogen nozzle (430) is positioned so that nitrogen is injected from an upper side to a lower side inside the container (110).
